(19) Europäisches Patentamt / European Patent Office / Office européen des brevets

(11) **EP 4 546 686 A1**

(12) **EUROPEAN PATENT APPLICATION**
published in accordance with Art. 153(4) EPC

(43) Date of publication:
**30.04.2025 Bulletin 2025/18**

(21) Application number: **23829971.3**

(22) Date of filing: **14.06.2023**

(51) International Patent Classification (IPC):
**H04L 1/20** (2006.01)

(52) Cooperative Patent Classification (CPC):
**H04L 1/20;** Y02D 30/70

(86) International application number:
**PCT/CN2023/100243**

(87) International publication number:
**WO 2024/001789 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.06.2022 CN 202210736249**

(71) Applicant: **ZTE Corporation**
**Shenzhen, Guangdong 518057 (CN)**

(72) Inventors:
• **HUANG, Qisheng**
  **Shenzhen, Guangdong 518057 (CN)**
• **ZHANG, Yaodong**
  **Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SIGNAL DETECTION METHOD AND DEVICE AND STORAGE MEDIUM**

(57) The present application discloses a signal detection method and device and a storage medium. The signal detection device (100) comprises: a signal processing assembly (130) configured to receive an initial signal comprising a plurality of data streams and preprocess the initial signal to obtain a plurality of data signals and a channel parameter corresponding to each data signal (S110); a signal grouping assembly (110) connected to an output end of the signal processing assembly and configured to group the plurality of data signals according to the channel parameters of the plurality of data signals (S120); and a signal detection assembly (120) connected to an output end of the signal grouping assembly and configured to receive the plurality of grouped data signals and perform grouping detection on the plurality of grouped data signals to obtain a grouping detection result for all the data signals (S130).

FIG. 1

# Description

## CROSS-REFERENCE TO RELATED APPLICATIONS

The present application is based on and claims priority to the Chinese Patent Application No. 202210736249.3, filed on June 27, 2022, the entire contents of which are incorporated herein by reference.

## TECHNICAL FIELD

The present application relates to the technical field of communications, in particular to a signal detection method, a signal detection device, and a computer-readable storage medium.

## BACKGROUND

With the continuous evolution of the WIFI protocol, the seventh generation WIFI protocol has been able to support up to 16 spatial streams, which brings great convenience for communications. At present, a minimum mean squared error (MMSE) algorithm, a zero forcing (ZF) algorithm and so on are generally adopted for detection of an access point (AP) under the sixth generation WIFI protocol. These algorithms are well adapted to AP detection of up to 8 spatial streams or 4 spatial streams supported by the sixth generation WIFI protocol, but with the obvious increase of spatial streams in the seventh generation WIFI protocol, the complexity of the above detection algorithms increases substantially, which makes it difficult to apply the algorithms to AP detection under the seventh generation WIFI protocol.

## SUMMARY

The following is an overview of the subject matter described in detail herein. The overview is not intended to limit the scope of protection of the claims.

Embodiments of the present application provide a signal detection method, a signal detection device, and a computer-readable storage medium.

In a first aspect, an embodiment of the present application provides a signal detection device. The signal detection device includes: a signal processing assembly configured to receive an initial signal including a plurality of data streams and preprocess the initial signal to obtain a plurality of data signals and a channel parameter corresponding to each data signal; a signal grouping assembly connected to an output end of the signal processing assembly and configured to receive the plurality of data signals and the channel parameter corresponding to each data signal, and group the plurality of data signals according to the channel parameters of the plurality of data signals; and a signal detection assembly connected to an output end of the signal grouping assembly and configured to receive the plurality of grouped data signals and perform group detection on the plurality of grouped data signals to obtain a group detection result for all the data signals.

In a second aspect, an embodiment of the present application further provides a signal detection method configured for a signal detection device. The signal detection device includes a signal processing assembly, a signal grouping assembly, and a signal detection assembly, and the signal detection assembly is connected to the signal grouping assembly and a signal combined detection assembly. The signal detection method includes: controlling the signal processing assembly to receive an initial signal including a plurality of data streams and preprocess the initial signal to obtain a plurality of data signals and a channel parameter corresponding to each data signal; controlling the signal grouping assembly to receive the plurality of data signals and the channel parameter corresponding to each data signal, and group the plurality of data signals according to the channel parameters of the plurality of data signals; and controlling the signal detection assembly to receive the plurality of grouped data signals and perform group detection on the plurality of grouped data signals to obtain a group detection result for all the data signals.

In a third aspect, an embodiment of the present application further provides a signal detection device. The signal detection device includes: at least one processor; and at least one memory configured to store at least one program, where the at least one program, when executed by the at least one processor, implements the signal detection method described above.

In a fourth aspect, an embodiment of the present application further provides a computer-readable storage medium having a processor-executable program stored therein, where the processor-executable program is configured, when executed by a processor, to implement the signal detection method described above.

Other features and advantages of the present application will be described in the following specification, and will become apparent in part from the specification, or will be understood by implementing the present application. The objective and other advantages of the present application can be realized and obtained by the structure specially pointed out in the specification, claims and drawings.

## BRIEF DESCRIPTION OF DRAWINGS

The accompanying drawings, which are intended to provide a further understanding of the technical methods of the present application and form a part of the specification, serve to explain the technical methods of the present application together with the embodiments of the present application, and do not form a limitation on the technical methods of the present application.

FIG. 1 is a schematic diagram of a signal detection device according to an embodiment of the present application;

FIG. 2 is a schematic diagram of a signal detection device according to another embodiment of the present application;

FIG. 3 is a schematic diagram of an application scenario of a signal detection device according to an embodiment of the present application;

FIG. 4 is a schematic diagram of a signal detection device according to yet another embodiment of the present application;

FIG. 5 is a schematic diagram of a signal detection device according to yet another embodiment of the present application;

FIG. 6 is a schematic diagram of a signal detection device according to yet another embodiment of the present application;

FIG. 7 is a schematic diagram of a signal detection device according to yet another embodiment of the present application;

FIG. 8 is a schematic diagram of a signal detection device according to yet another embodiment of the present application;

FIG. 9 is a schematic diagram of a signal detection device according to yet another embodiment of the present application;

FIG. 10 is a flow diagram of a signal detection method according to an embodiment of the present application;

FIG. 11 is a flow diagram after controlling a signal detection assembly to perform group detection on a plurality of grouped data signals, in a signal detection method according to an embodiment of the present application;

FIG. 12 is a flow diagram of controlling a signal grouping assembly to group a plurality of data signals, in a signal detection method according to an embodiment of the present application;

FIG. 13 is a flow diagram of controlling a signal detection assembly to perform group detection on a plurality of grouped data signals, in a signal detection method according to an embodiment of the present application;

FIG. 14 is a flow diagram of controlling a signal processing assembly to preprocess an initial signal to obtain a plurality of data signals and a channel parameter corresponding to each data signal, in a signal detection method according to an embodiment of the present application; and

FIG. 15 is a schematic diagram of a signal detection device according to an embodiment of the present application.

DETAILED DESCRIPTION

In order to make the objectives, technical methods and advantages of the present application clearer, the present application is further described in detail below with reference to the accompanying drawings and embodiments. It is to be understood that the embodiments described herein are merely illustrative of the present application and are not intended to limit the present application.

It is to be noted that although a logical sequence is illustrated in the flow diagram, in some instances, the steps shown or described may be performed in an order different from that shown in the flow diagram. The terms "first", "second", and the like in the specification, the claims and the above-mentioned accompanying drawings are used for distinguishing between similar objects and not necessarily for describing a particular sequential or chronological order.

The present application provides a signal detection method, a signal detection device, and a computer-readable storage medium. The signal detection device according to an embodiment includes: a signal processing assembly configured to receive an initial signal including a plurality of data streams and preprocess the initial signal to obtain a plurality of data signals and a channel parameter corresponding to each data signal; a signal grouping assembly connected to an output end of the signal processing assembly and configured to receive the plurality of data signals and the channel parameter corresponding to each data signal, and group the plurality of data signals according to the channel parameters of the plurality of data signals; and a signal detection assembly connected to an output end of the signal grouping assembly and configured to receive the plurality of grouped data signals and perform group detection on the plurality of grouped data signals to obtain a group detection result for all the data signals. In this embodiment, the signal processing assembly preprocesses the initial signal to obtain the plurality of data signals and the channel parameter corresponding to each data signal, then the signal grouping assembly groups the plurality of data signals to be detected according to the channel parameters, and moreover, the signal detection assembly performs group detection on the grouped data signals. Since only a relatively smaller number of data signals within each group need to be detected after grouping, the complex signal detection process may be split into relatively simple signal detection processes within each group, realizing the reduction in the complexity of signal detection, thereby making up for the technical gaps in relevant methods.

The embodiments of the present application are further illustrated below in conjunction with the accompanying drawings.

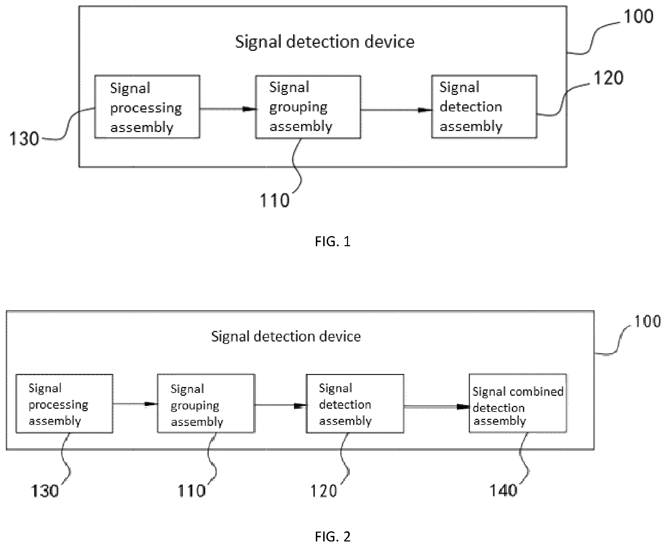

As shown in FIG. 1, FIG. 1 is a schematic diagram of a signal detection device 100 according to an embodiment of the present application. The signal detection device 100 includes, but is not limited to, a signal grouping assembly 110, a signal detection assembly 120, and a signal processing assembly 130.

The signal grouping assembly 110 is connected to the signal detection assembly 120 and the signal processing assembly 130.

The signal processing assembly 130 is configured to receive an initial signal including a plurality of data streams and preprocess the initial signal to obtain a plurality of data signals and a channel parameter corresponding to each data signal.

The signal grouping assembly 110 is configured to receive the plurality of data signals and the channel parameter corresponding to each data signal, and group the plurality of data signals according to the channel parameters of the plurality of data signals.

The signal detection assembly 120 is configured to receive the plurality of grouped data signals and perform group detection on the plurality of grouped data signals to obtain a group detection result for all the data signals.

The plurality of data signals and the channel parameter corresponding to each data signal are obtained by preprocessing the initial signal by the signal processing assembly 130, so that the signal grouping assembly 110 groups the plurality of data signals to be detected according to the channel parameters, and moreover, the grouped data signals undergo group detection based on the signal detection assembly 120. Since only a relatively smaller number of data signals within each group need to be detected after grouping, the complex signal detection process can be split into relatively simple signal detection processes in each group, realizing the reduction in the complexity of signal detection, thereby making up for the technical gaps in relevant methods.

In one embodiment, as shown in FIG. 2, the signal detection device 100 further includes: a signal combined detection assembly 140 connected to an output end of the signal detection assembly 120 and configured to receive the group detection result for all the data signals and perform interference cancellation processing on the group detection result to obtain an output detection result for all the data signals. The signal combined detection assembly 140 performs interference cancellation processing on the group detection result to obtain the output detection result, so that the signal detection performance can be improved, and the effect of errors that may be brought about by group detection is reduced to meet the detection requirements.

In one embodiment, the signal processing assembly may include, but is not limited to:

a first signal processing assembly configured to receive an initial signal including a plurality of data streams and perform front-end processing on the initial signal to obtain a plurality of first processed signals; and

a second signal processing assembly connected to the first signal processing assembly and the signal grouping assembly, and configured to receive all the first processed signals sent by the first signal processing assembly, perform frequency bias correction and frequency domain processing on all the first processed signals to obtain all the data signals carrying the channel parameters, and send all the data signals and the channel parameter corresponding to each data signal to the signal grouping assembly.

Through the cooperation of the first signal processing assembly and the second signal processing assembly, it can be realized that an initial wireless signal is obtained and the wireless signal is preprocessed to obtain data signals to be detected and corresponding channel parameters, so that the signal grouping assembly can obtain the channel parameter of each data signal and carry out the subsequent detection operation, that is, the first signal processing assembly and the second signal processing assembly may cooperate to play a role of preprocessing the initial data signals to determine the channel parameter of each data signal.

The first signal processing assembly may be used as an RF front-end to receive the initial wireless signal from an air interface and perform front-end processing on the same. The front-end processing includes, but is not limited to, AGC amplification, spectral shift, filtering, etc. The first processed signals are obtained through the processing of the first signal processing assembly, so that the first processed signals may become signals capable of being processed by a back-end.

The second signal processing assembly may include, but is not limited to, a signal input frequency bias compensation element, a fast Fourier transform (FFT) module, and a long training field (LTF) parser. The signal input frequency bias compensation element can correct the frequency bias of the first processed signals to reduce the inter-subcarrier interference caused by the frequency bias, then the processed signals are sent to the FFT module to be converted into a frequency domain for processing, the LTF portion and the rest of the data portion are separated during the processing in the frequency domain, and then the LTF portion is sent to the LTF parser for channel estimation to obtain a channel matrix H. Thus, the data signals carrying the channel parameters can be obtained, so as to facilitate sending the channel parameter of each data signal to the signal grouping assembly. In one embodiment, the signal processing assembly, the signal grouping assembly, the signal detection assembly, and the signal combined detection assembly may be integrally disposed in the signal detection device, or may be separately detached from the signal detection device, or a person skilled in the art may also select a cooperation implementation method for the assemblies, which is not limited herein.

In one embodiment, the signal detection device may, but is not limited to, be applied to a communication system that uses the seventh generation WIFI protocol and communicates based on the multiple-input multiple-output (MIMO) technology, and may be adapted to an AP under the seventh generation WIFI protocol that simultaneously processes a relatively large number (e.g., the number of spatial streams is greater than 4) of spatial stream data, where "spatial stream data" in this embodiment has essentially the same meaning as "spatial stream" and "data signal" in the following embodiments, i.e., it refers to a signal to be detected, which is hereby clarified to avoid confusion.

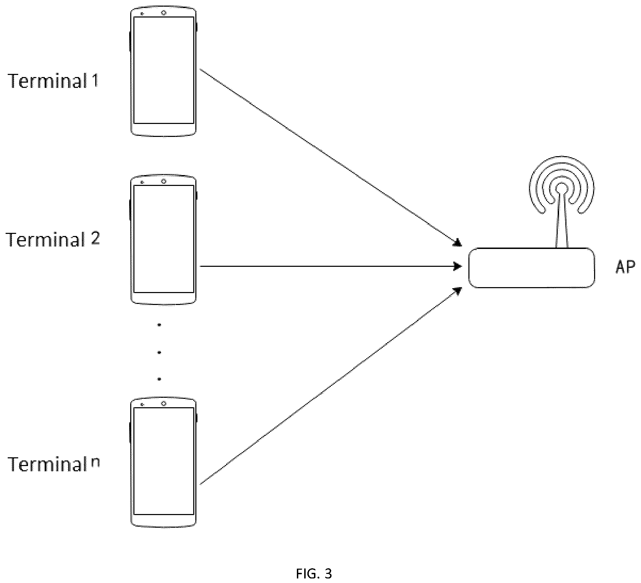

In one embodiment, the application scenario of the signal detection device may be, but is not limited to, a site STA dense access scenario, as shown in FIG. 3, which is a schematic diagram of an application scenario of the signal detection device according to an embodiment of the present application. In this case, an AP in FIG. 3 needs to simultaneously process a plurality of spatial streams from various terminals (i.e., terminal 1, terminal 2, ..., terminal n, shown in FIG. 3), respectively. That is, the AP adopts the MU-MIMO technology permitted by the seventh generation WIFI protocol for the access of the spatial streams until the number of streams that the AP needs to detect at the same time reaches 16. In this case, the signal detection device may group the spatial streams according to the preset strategy and detect the same in the groups to obtain the group detection result and then send the group detection result into the subsequent modules for processing. The above process may complete decoupling of the received signals. It is to be noted that the present application can not only be applied to dense access multi-stream detection scenarios of the seventh generation WIFI protocol, but also is compatible with previous WIFI protocols, and the present application not only can be applied to Single AP detection in the field of WLAN, but also may be applied to MIMO detection of multiple APs in the field of WLAN, which is not limited herein.

In one embodiment, the terminal in FIG. 3 may be, but is not limited to, user equipment (UE), a user unit, a user station, a mobile station, a mobile platform, a remote station, a remote terminal, a mobile device, a user terminal, a wireless communication device, a user agent, or a user device, and so on, and the presentation forms in specific application scenarios may be different, that is, the terminal may be different in different application scenarios, which is not limited herein.

In one embodiment, the signal grouping assembly is configured to calculate an eigenvalue corresponding to each data signal based on the obtained channel parameters of the plurality of data signals and a preset channel parameter scoring strategy, and classify a number of data signals with eigenvalues being within the same preset range among all the data signals into the same group. That is, the signal grouping assembly can achieve accurate grouping based on the related eigenvalues obtained by calculating the plurality of data signals respectively, and such grouping way is dominated by a scoring value, so there will not be too many cases of wrong grouping or omission of grouping, and it can be ensured that the grouping can be carried out properly.

In one embodiment, the channel parameters may include multiple types, such as a signal to interference plus noise ratio (SINR), a signal-noise ratio (SNR), and a channel matrix, which is not limited herein, and when the eigenvalues of the plurality of data signals are calculated, one or more of the channel parameters may be selected as criteria for calculation. The preset range may be taken as a similar range, i.e., a number of data information with similar eigenvalues may be classified into the same group, which indicates that the preset range of the grouping result may be set according to actual scenarios, which is not limited herein. Furthermore, the number of groups obtained based on the classifying way of this embodiment and the number of data signals in each group may not be limited.

In one embodiment, the channel parameter scoring strategy may be set according to specific application scenarios, which is not limited herein. For example, the channel parameter scoring strategy may include, but is not limited to, at least one of following:

when the channel parameter includes a signal to interference plus noise ratio, performing scoring based on the signal to interference plus noise ratio;

when the channel parameter includes a signal-noise ratio, performing scoring based on the signal-noise ratio;

when the channel parameter includes a channel matrix, performing scoring based on main diagonal elements of the channel matrix;

when the channel parameter includes a channel matrix, performing scoring based on a column 2-norm of the channel matrix; or

when the channel parameter includes a signal strength, performing scoring based on the signal strength.

It will be appreciated that the channel parameters may also include other types, then the channel parameter scoring strategy may vary accordingly, without limitation. Examples are given below to illustrate the operation principle of the signal grouping assembly.

Example 1:

A grouping device is used as a signal grouping assembly, and the grouping device is an apparatus for grouping data signals according to certain rules or parameters (e.g., a channel matrix H or signal strength) for the purpose of classifying data signals of an operating environment into the same group for detection. The input thereof may be the channel matrix H and the data signals to be detected, and the output thereof is the data signals to be detected obtained after grouping adjustment, so as to indicate which of the data signals are fed, within the same group, to the subsequent signal detection assembly for detection.

One grouping process may be as follows: calculating a score for each spatial stream based on a scoring criterion, and classifying spatial streams with similar scores into the same group. The scoring criterion may be, but is not limited to, SNR optimization, predominance of main diagonal elements of the channel matrix, SINR optimization, maximum column 2-norm of the channel matrix, optimal signal receiving strength, etc., and groups with high scores may be selected to be prioritized for detection in the subsequent detection.

Taking the adoption of the SNR optimization algorithm as an example, after the obtained channel matrix H is stored, the channel matrix H is inversed to obtain $\mathbf{H}^+ = [(\mathbf{h}_1^+)^H, (\mathbf{h}_2^+)^H, \cdots, (\mathbf{h}_{N_t}^+)^H]^H$, and then a score of a spatial stream in the corresponding sorting group is calculated by:

$$Score_p = \sum_{i=(p-1)\times L+1}^{p*L} \left\| \mathbf{h}_i^+ \right\|^2$$

Then a current group that should be detected is a group $p_{cur} = \arg\min_p Score_p$ corresponding to the above calculation result.

Taking the main diagonal dominance algorithm as an example, the channel matrix H is partitioned by rows to obtain $[\mathbf{h}_1^H, \mathbf{h}_2^H, \cdots \mathbf{h}_{N_r}^H]$, and each row vector may be expressed as $\mathbf{h}_i = [h_1, h_2, \cdots, h_{N_t}]$. In this case, the score of this row is:

$$Score_{h_i} = \frac{\| h_i \|^2}{\sum\limits_{k=1, k \neq i}^{N_t} \| h_k \|^2}$$

In this case, the score of the current group is

$$Score_p = \sum_{i=(p-1)L+1}^{P\times L} Score_{h_i}$$

, and the group that should be detected is $p_{cur} = \arg\min_p Score_p$ .

In one embodiment, the signal detection assembly may, but is not limited to, be configured to perform serial group detection or parallel group detection on the plurality of data signals based on the grouping result, that is, the signal detection assembly may adopt a single group detector for serial detection or a plurality of group detectors for parallel detection, and the accuracy of detection on the plurality of data signals can be ensured by the serial group detection or the parallel group detection. The serial group detection or the parallel group detection may be selected and set according to actual scenarios, that is, in general, parallel detection is more efficient but also more costly, so it is necessary to choose corresponding detection methods in specific scenarios.

In one embodiment, the signal detection assembly may, but is not limited to, be configured to adopt at least one of a ZF detection algorithm, an MMSE detection algorithm, a maximum likelihood detection algorithm, a spherical detection algorithm, a serial interference cancellation detection algorithm, and a parallel interference cancellation detection algorithm to perform group detection on the plurality of grouped data signals, so as to ensure that the group detection process can be carried out properly, that is, the plurality of grouped data signals may be subjected to group detection accurately and reliably with the assistance of the algorithms. The specific algorithms adopted may be selected and set according to specific scenarios, which is not limited herein. The maximum likelihood detection algorithm may be of various types, for example, it may be of a normal state, or of a reduced state.

It is to be noted that the ZF detection algorithm, the MMSE detection algorithm, the maximum likelihood detection algorithm, the spherical detection algorithm, the serial interference cancellation detection algorithm, and the parallel interference cancellation detection algorithm described above are well known to those skilled in the art, and therefore are not described herein.

In one embodiment, since inter-group interference may exist between groups after group detection for each data signal, in order to cancel such inter-group interference, the signal combined detection assembly may, but is not limited to, be configured to perform interference cancellation processing on the group detection result using at least one of the following ways:

    performing serial interference cancellation processing on the group detection result;

    performing parallel interference cancellation processing on the group detection result;

acquiring, from the group detection result, a signal detection result for each data signal and performing serial interference cancellation processing on all the signal detection results; or

acquiring, from the group detection result, the signal detection result for each data signal and performing parallel interference cancellation processing on all the signal detection results.

It is to be noted that in specific application scenarios, one or more suitable interference cancellation processing methods described above may be selected according to the actual situation for interference cancellation processing.

In one embodiment, serial interference cancellation processing is performed on the group detection result, i.e., an inter-group serial interference cancellation method on a group basis is deployed, which is conducive to the cancellation of serial interference among the groups; or parallel interference cancellation processing is performed on the group detection result, i.e., an inter-group parallel interference cancellation method on a group basis is deployed, which is conducive to the cancellation of parallel interference among the groups; the signal detection result for each data signal is acquired from the group detection result, and serial interference cancellation processing is performed on all the signal detection results, i.e., a serial interference cancellation method based on the data signals is deployed, which is conducive to the cancellation of serial interference among the groups; or the signal detection result for each data signal is acquired from the group detection result, and parallel interference cancellation processing is performed on all the signal detection results, i.e., a parallel interference cancellation method based on the data signals is deployed, which is conducive to the cancellation of parallel interference among the groups.

In one embodiment, the signal combined detection assembly is further configured to perform multiple iterative interference cancellation processing on the output detection result, where an input of the next iterative interference cancellation processing is the output detection result corresponding to the previous iterative interference cancellation processing. Performing iterative interference cancellation processing on the output detection result is conducive to optimizing the output detection result in an iterative manner, i.e., a single signal combined detection assembly with an iterative structure is deployed to perform iterative interference cancellation for obtaining a better output detection result. For example, it is possible to, but not limited to, set the input of this iteration as the output detection result of the previous iteration, and so forth, and when the preset number of iterations is reached or the detection result is determined to meet the preset requirements, the iteration may be stopped.

It is to be noted that the specific implementations of the serial interference cancellation processing, the parallel interference cancellation processing, and the iterative interference cancellation processing are well known to those skilled in the art, which thus will not be discussed herein.

Various examples of the signal detection device of the embodiments of the present application are given below.

Example 2:

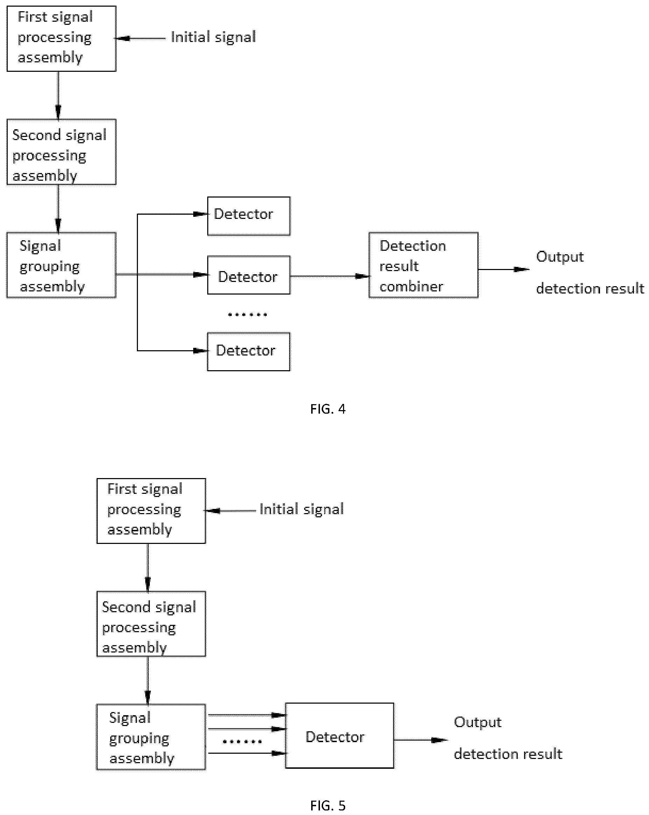

As shown in FIG. 4, FIG. 4 is a schematic diagram of a signal detection device according to yet another embodiment of the present application.

Referring to FIG. 4, the signal detection device adopts a setting mode of a plurality of parallel detectors and a single detection result combiner. The signal detection assembly adopts parallel operation of the plurality of detectors. The more the detectors, the higher the degree of parallelism, the higher the detection speed but also the higher the cost, and the number of the detectors is less than or equal to the number of groups. Two detection result combiners may be deployed in the signal combined detection assembly, and operate in serial with each other. Theoretically, the more the detection result combiners, the more accurate the output detection result.

Example 3:

As shown in FIG. 5, FIG. 5 is a schematic diagram of a signal detection device according to yet another embodiment of the present application.
Referring to FIG. 5, the signal detection device adopts a setting mode of a single serial detector and no detection result combiner, which is relatively low in cost. However, due to the lack of combined operation for group detection results, there may be some assembly interference errors.

Example 4:

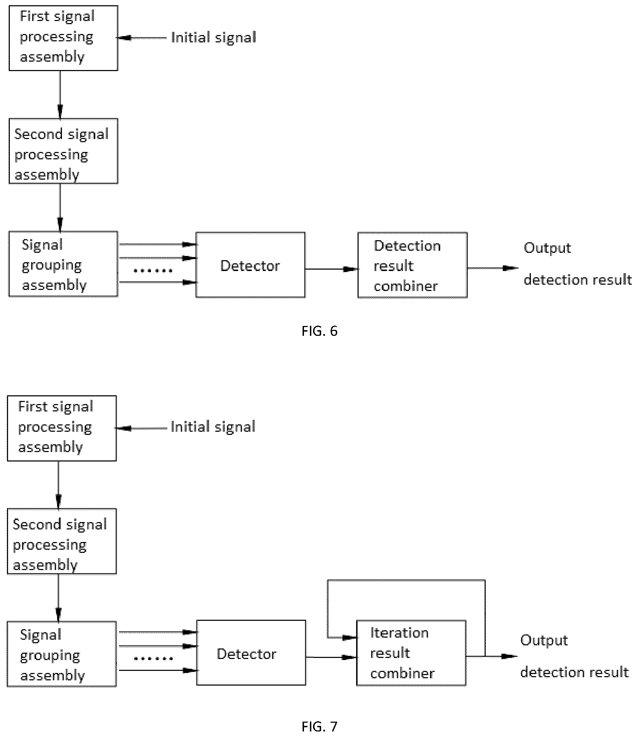

As shown in FIG. 6, FIG. 6 is a schematic diagram of a signal detection device according to yet another embodiment of the present application.
Referring to FIG. 6, the signal detection device adopts a setting mode of a single serial detector and a single detection result combiner, which can relatively reduce the setting cost.

Example 5:

As shown in FIG. 7, FIG. 7 is a schematic diagram of a signal detection device according to yet another embodiment of the present application.
Referring to FIG. 7, the signal detection device adopts a setting mode of a single serial detector and a single iterative detection result combiner, which is conducive to optimizing the output result in an iterative manner.

Example 6:

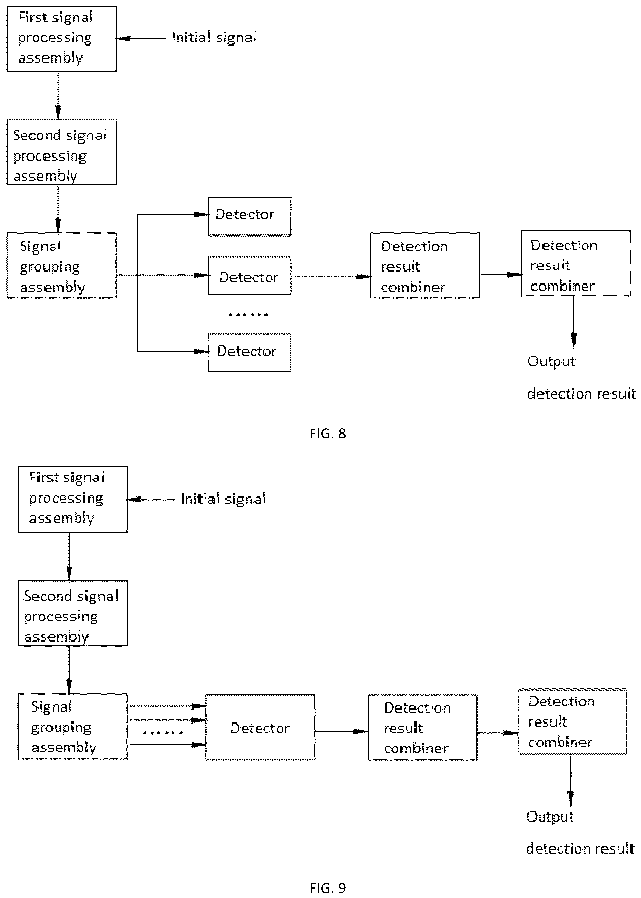

As shown in FIG. 8, FIG. 8 is a schematic diagram of a signal detection device according to yet another embodiment of the present application.

Referring to FIG. 8, the signal detection device adopts a setting mode of a plurality of parallel detectors and a plurality of serial detection result combiners (the number shown in FIG. 8 is two, and may be more in specific scenarios), which is conducive to optimizing the output detection result.

Example 7:

As shown in FIG. 9, FIG. 9 is a schematic diagram of a signal detection device according to yet another embodiment of the present application.

Referring to FIG. 9, the signal detection device adopts a setting mode of a single serial detector and a plurality of serial detection result combiners (the number shown in FIG. 9 is two, and may be more in specific scenarios), which can relatively reduce the setting cost and optimize the output detection result.

It is to be noted that the above functions of the signal detection device 100 and the signal grouping assembly 110, the signal detection assembly 120, and the signal processing assembly 130 thereof shown in FIG. 1, and the above functions of the signal detection device 100 and the signal processing assembly 130, the signal grouping assembly 110, the signal detection assembly 120, and the signal combined detection assembly 140 thereof shown in FIG. 2 may be applied in different application scenarios, which is not limited herein.

It may be appreciated by those skilled in the art that the signal detection device 100 and the signal grouping assembly 110, the signal detection assembly 120, and the signal processing assembly 130 thereof shown in FIG. 1, and the signal detection device 100 and the signal processing assembly 130, the signal grouping assembly 110, the signal detection assembly 120, and the signal combined detection assembly 140 thereof shown in FIG. 2 may be applied in 5G and 6G communication network systems and subsequent evolved mobile communication network systems, etc., which is not specifically limited in this embodiment.

It may be appreciated by those skilled in the art that the signal detection device 100 and the signal grouping assembly 110, the signal detection assembly 120, and the signal processing assembly 130 thereof shown in FIG. 1, and the signal detection device 100 and the signal processing assembly 130, the signal grouping assembly 110, the signal detection assembly 120, and the signal combined detection assembly 140 thereof shown in FIG. 2 do not constitute a limitation to the embodiments of the present application, and the embodiments of the present application may include more or fewer parts than shown, or combinations of certain parts, or different arrangements of parts.

Based on the above embodiments of the signal detection device, various embodiments of a signal detection method of the present application are given below.

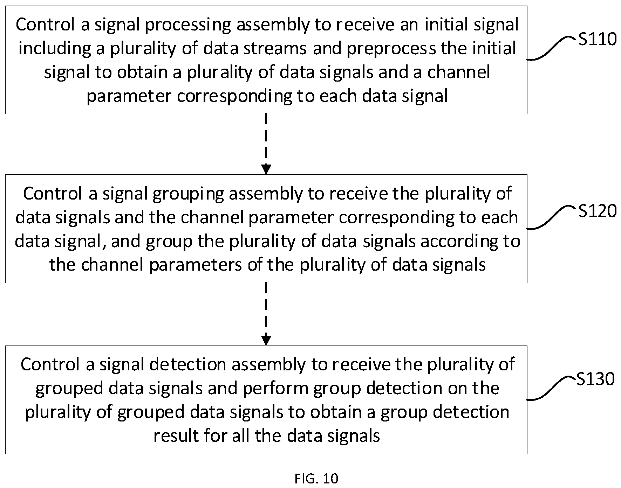

As shown in FIG. 10, FIG. 10 is a flow diagram of a signal detection method according to an embodiment of the present application. The signal detection method may, but is not limited to, be applied to a signal detection device, for example, the signal detection method is applied to the signal detection device 100 in the embodiment shown in FIG. 1 or the signal detection device 100 in the embodiment shown in FIG. 2. The signal detection method may include, but is not limited to, steps S110 to S130.

Step S110: a signal processing assembly is controlled to receive an initial signal including a plurality of data streams and preprocess the initial signal to obtain a plurality of data signals and a channel parameter corresponding to each data signal.

Step S120: a signal grouping assembly is controlled to receive the plurality of data signals and the channel parameter corresponding to each data signal, and group the plurality of data signals according to the channel parameters of the plurality of data signals.

Step S130: a signal detection assembly is controlled to receive the plurality of grouped data signals and perform group detection on the plurality of grouped data signals to obtain a group detection result for all the data signals.

In this step, the signal processing assembly preprocesses the initial signal to obtain the plurality of data signals and the channel parameter corresponding to each data signal, then the signal grouping assembly groups the plurality of data signals to be detected according to the channel parameters, and moreover, the signal detection assembly performs group detection on the grouped data signals. Since only a relatively smaller number of data signals within each group need to be detected after grouping, the complex signal detection process may be split into relatively simple signal detection processes within each group, realizing the reduction in the complexity of signal detection, thereby making up for the technical gaps in relevant methods.

It is to be noted that since steps S110 to S130 of this embodiment and the related embodiments of the signal detection device described above belong to the same inventive concept and are in perfect correspondence with each other, and the difference only lies in the different objects of the method and the device, other specific implementations as well as the related implementations of steps S110 to S130 of this embodiment may be referred to the related embodiments of the signal detection device in the embodiments described above, and in order to avoid redundancy, other specific implementations as well as the related implementations of steps S110 to S130 of this embodiment will not be repeated herein.

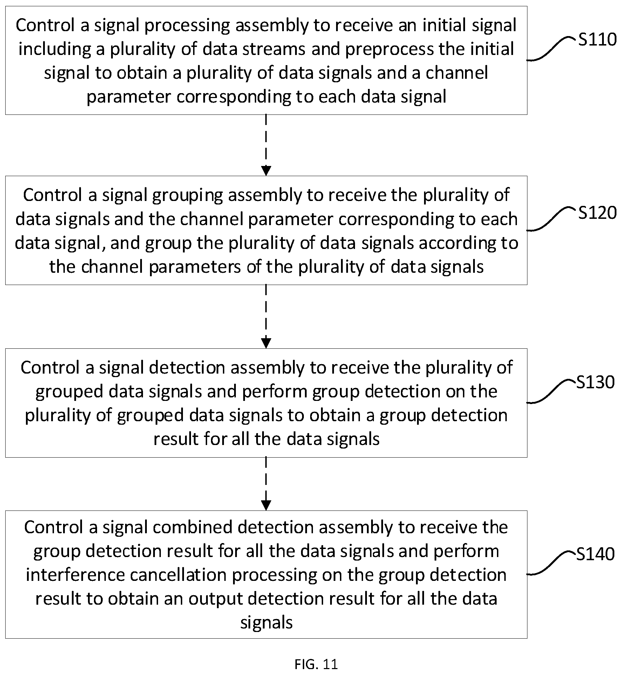

As shown in FIG. 11, in one embodiment of the present application, the steps after step S130 are illustrated, and further include, but are not limited to, step S140.

Step S140: a signal combined detection assembly is controlled to receive the group detection result for all the data signals and perform interference cancellation processing on the group detection result to obtain an output detection result for all the data signals.

In this step, the output detection result is obtained by performing interference cancellation processing on the group detection result, which can improve the signal detection performance and reduce the effect of errors that may be brought about by group detection to meet the detection requirements.

In one embodiment of the present application, "controlling a signal combined detection assembly to perform interference cancellation processing on the group detection result" in step S140 is illustrated, and includes at least one of the following:

performing serial interference cancellation processing on the group detection result;

performing parallel interference cancellation processing on the group detection result;

acquiring, from the group detection result, a signal detection result for each data signal and performing serial interference cancellation processing on all the signal detection results; or

acquiring, from the group detection result, the signal detection result for each data signal and performing parallel interference cancellation processing on all the signal detection results.

In this step, serial interference cancellation processing is performed on the group detection result, i.e., an inter-group serial interference cancellation method on a group basis is deployed, which is conducive to the cancellation of serial interference among the groups; or parallel interference cancellation processing is performed on the group detection result, i.e., an inter-group parallel interference cancellation method on a group basis is deployed, which is conducive to the cancellation of parallel interference among the groups; the signal detection result for each data signal is acquired from the group detection result, and serial interference cancellation processing is performed on all the signal detection results, i.e., a serial interference cancellation method based on the data signals is deployed, which is conducive to the cancellation of serial interference among the groups; or the signal detection result for each data signal is acquired from the group detection result, and parallel interference cancellation processing is performed on all the signal detection results, i.e., a parallel interference cancellation method based on the data signals is deployed, which is conducive to the cancellation of parallel interference among the groups.

In one embodiment of the present application, the steps after step S140 are illustrated, and further include, but are not limited to, step S150.

Step S150: the signal combined detection assembly is controlled to perform multiple iterative interference cancellation processing on the output detection result, where an input of the next iterative interference cancellation processing is the output detection result corresponding to the previous iterative interference cancellation processing.

In this step, performing iterative interference cancellation processing on the output detection result is conducive to optimizing the output detection result in an iterative manner, i.e., a single signal combined detection assembly with an iterative structure is deployed to perform iterative interference cancellation for obtaining a better output detection result. For example, it is possible to, but not limited to, set the input of this iteration as the output detection result of the previous iteration, and so forth, and when the preset number of iterations is reached or the detection result is determined to meet the preset requirements, the iteration may be stopped.

It is to be noted that since steps S140 and S150 of this embodiment and the related embodiments of the signal detection device described above belong to the same inventive concept and are in perfect correspondence with each other, and the difference only lies in the different objects of the method and the device, other specific implementations as well as the related implementations of steps S140 and S150 of this embodiment may be referred to the related embodiments of the signal detection device in the embodiments described above, and in order to avoid redundancy, other specific implementations as well as the related implementations of steps S140 and S150 of this embodiment will not be repeated herein.

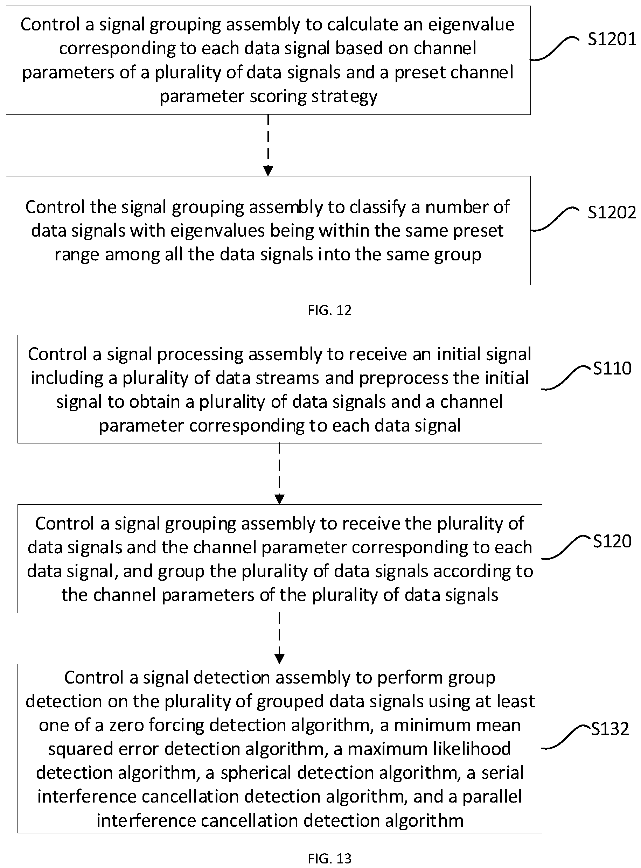

As shown in FIG. 12, in one embodiment of the present application, step S120 is illustrated, and step S120 includes, but is not limited to, steps S1201 to S1202.

Step S1201: the signal grouping assembly is controlled to calculate an eigenvalue corresponding to each data signal based on the channel parameters of the plurality of data signals and a preset channel parameter scoring strategy.

Step S1202: the signal grouping assembly is controlled to classify a number of data signals with eigenvalues being within the same preset range among all the data signals into the same group.

In this step, the signal grouping assembly is controlled to achieve accurate grouping based on the related eigenvalues obtained by calculating the plurality of data signals respectively, and such grouping way is dominated by a scoring value, so there will not be too many cases of wrong grouping or omission of grouping, and it can be ensured that the grouping can be carried out properly.

In one embodiment, the channel parameter scoring strategy may be set according to specific application scenarios, which is not limited herein. For example, the channel parameter scoring strategy may include, but is not limited to, at least one of following:

when the channel parameter includes a signal to interference plus noise ratio, performing scoring based on the signal to interference plus noise ratio;

when the channel parameter includes a signal-noise ratio, performing scoring based on the signal-noise ratio;

when the channel parameter includes a channel matrix, performing scoring based on main diagonal elements of the channel matrix;

when the channel parameter includes a channel matrix, performing scoring based on a column 2-norm of the channel matrix; or

when the channel parameter includes a signal strength, performing scoring based on the signal strength.

It will be appreciated that the channel parameters may also include other types, and thus the channel parameter scoring strategy may vary, which is not limited.

It is to be noted that since steps S1201 and S1202 of this embodiment and the related embodiments of the signal detection device described above belong to the same inventive concept and are in perfect correspondence with each other, and the difference only lies in the different objects of the method and the device, other specific implementations as well as the related implementations of steps S1201 and S1202 of this embodiment may be referred to the related embodiments of the signal detection device in the embodiments described above, and in order to avoid redundancy, other specific implementations as well as the related implementations of steps S1201 and S1202 of this embodiment will not be repeated herein.

In one embodiment of the present application, "controlling a signal detection assembly to perform group detection on the plurality of grouped data signals" in step S130 is illustrated, and step S130 includes, but is not limited to, step S131.

Step S131: the signal detection assembly is controlled to perform serial group detection or parallel group detection on the plurality of data signals based on the grouping result.

In this step, the signal detection assembly may adopt a single group detector for serial detection or a plurality of group detectors for parallel detection, and the accuracy of detection on the plurality of data signals can be ensured by the serial group detection or the parallel group detection. The serial group detection or the parallel group detection may be selected and set according to actual scenarios, that is, in general, parallel detection is more efficient but also more costly, so it is necessary to choose corresponding detection methods in specific scenarios.

It is to be noted that since step S131 of this embodiment and the related embodiments of the signal detection device described above belong to the same inventive concept and are in perfect correspondence with each other, and the difference only lies in the different objects of the method and the device, other specific implementations as well as the related implementations of step S131 of this embodiment may be referred to the related embodiments of the signal detection device in the embodiments described above, and in order to avoid redundancy, other specific implementations as well as the related implementations of step S131 of this embodiment will not be repeated herein.

As shown in FIG. 13, in one embodiment of the present application, "controlling a signal detection assembly to perform group detection on the plurality of grouped data signals" in step S130 is illustrated, and step S130 includes, but is not limited to, step S132.

Step S132: the signal detection assembly is controlled to perform group detection on the plurality of grouped data signals using at least one of a zero forcing detection algorithm, a minimum mean squared error detection algorithm, a maximum likelihood detection algorithm, a spherical detection algorithm, a serial interference cancellation detection algorithm, and a parallel interference cancellation detection algorithm.

In this step, algorithmic detection is used to ensure that the group detection process can proceed properly, i.e., the plurality of data signals can be subjected to group detection accurately and reliably with the assistance of the algorithms.

It is to be noted that since step S132 of this embodiment and the related embodiments of the signal detection device described above belong to the same inventive concept and are in perfect correspondence with each other, and the difference only lies in the different objects of the method and the device, other specific implementations as well as the related implementations of step S132 of this embodiment may be referred to the related embodiments of the signal detection device in the embodiments described above, and in order to avoid redundancy, other specific implementations as well as the related implementations of step S132 of this embodiment will not be repeated herein.

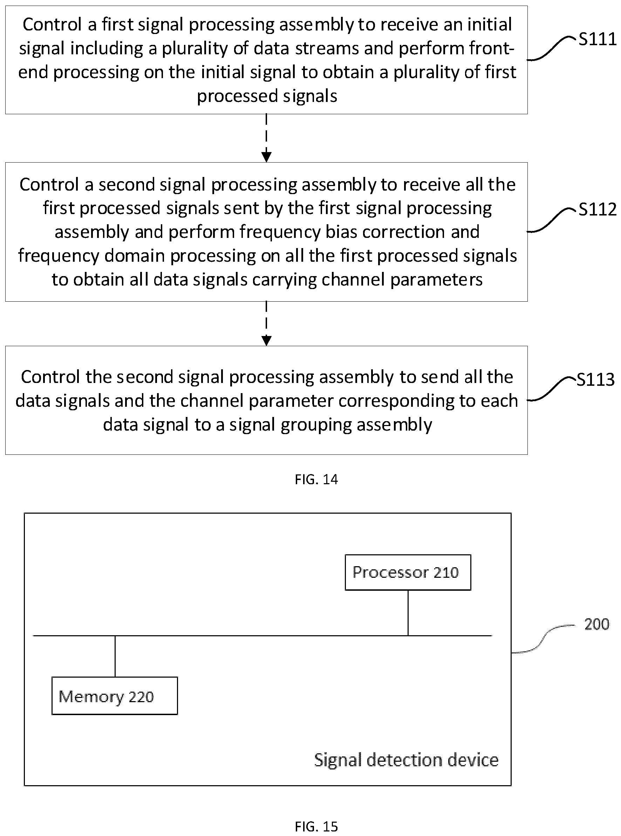

As shown in FIG. 14, in one embodiment of the present application, step S110 is illustrated, and step S110 includes, but is not limited to, steps S111 to S113.

Step S111: the first signal processing assembly is controlled to receive an initial signal including a plurality of data streams and perform front-end processing on the initial signal to obtain a plurality of first processed signals.

Step S112: the second signal processing assembly is controlled to receive all the first processed signals sent by the first signal processing assembly and perform frequency bias correction and frequency domain processing on all the first processed signals to obtain all the data signals carrying the channel parameters.

Step S113: the second signal processing assembly is controlled to send all the data signals and the channel parameter corresponding to each data signal to the signal grouping assembly.

In this step, through control over the first signal processing assembly and the second signal processing assembly, it can be realized that an initial wireless signal is obtained and the wireless signal is preprocessed to obtain data signals to be detected and corresponding channel parameters, so that the signal grouping assembly may obtain the channel parameter of each data signal and carry out the subsequent detection operation, that is, the first signal processing assembly and the second signal processing assembly are controlled to cooperate to play a role of preprocessing the initial data signals to determine the channel parameter of each data signal.

It is to be noted that since steps S111 and S113 of this embodiment and the related embodiments of the signal detection device described above belong to the same inventive concept and are in perfect correspondence with each other, and the difference only lies in the different objects of the method and the device, other specific implementations as well as the related implementations of steps S111 and S113 of this embodiment may be referred to the related embodiments of the signal detection device in the embodiments described above, and in order to avoid redundancy, other specific implementations as well as the related implementations of steps S111 and S113 of this embodiment will not be repeated herein.

In addition, as shown in FIG. 15, one embodiment of the present application further discloses a signal detection device 200. The signal detection device includes: at least one processor 210; and at least one memory 220 configured to store at least one program. The at least one program, when executed by the at least one processor 210, implements the signal detection method according to any of the preceding embodiments.

In addition, one embodiment of the present application further discloses a computer-readable storage medium having computer-executable instructions stored therein. The computer-executable instructions are configured to perform the signal detection method according to any of the preceding embodiments.

In addition, one embodiment of the present application further discloses a computer program product including a computer program or computer instructions. The computer program or computer instructions are stored in a computer-readable storage medium, a processor of a computer device reads the computer program or computer instructions from the computer-readable storage medium, and the processor executes the computer program or computer instructions such that the computer device performs the signal detection method according to any of the preceding embodiments.

In the embodiments of the present application, the signal processing assembly preprocesses the initial signal to obtain the plurality of data signals and the channel parameter corresponding to each data signal, then the signal grouping assembly groups the plurality of data signals to be detected according to the channel parameters, and moreover, the signal detection assembly performs group detection on the grouped data signals. Since only a relatively smaller number of data signals within each group need to be detected after grouping, the complex signal detection process may be split into relatively simple signal detection processes within each group, realizing the reduction in the complexity of signal detection, thereby making up for the technical gaps in relevant methods.

It will be understood by those of ordinary skill in the art that all or some of the steps in the method described above and systems may be implemented as software, firmware, hardware, and suitable combinations thereof. Some or all of physical assemblies may be implemented as software executed by a processor, such as a central processor, a digital signal processor, or a microprocessor, or as hardware, or as integrated circuits, such as application-specific integrated circuits. Such software may be distributed on a computer-readable medium, and the computer-readable medium may include a computer storage medium (or non-transitory medium) and a communication medium (or transitory medium). As is well known to those of ordinary skill in the art, the term "computer storage medium" includes volatile and non-volatile, removable and non-removable media implemented in any method or technique for storing information, such as computer-readable instructions, data structures, program modules, or other data. Computer storage media include, but are not limited to, an RAM, an ROM, an EEPROM, a flash memory or other memory technology, a CD-ROM, a digital versatile disk (DVD) or other optical disk storage, magnetic cartridges, magnetic tapes, magnetic disk storage, or other magnetic storage devices, or any other media that can be used to store desired information and that can be accessed by a computer. In addition, it is well known to those of ordinary skill in the art that communication media typically contain computer-readable instructions, data structures, program modules, or other data in a modulated data signal such as a carrier wave or other transmission mechanism, and may include any information delivery medium.

**Claims**

**1.** A signal detection device, comprising:

a signal processing assembly configured to receive an initial signal comprising a plurality of data streams and preprocess the initial signal to obtain a plurality of data signals and a channel parameter corresponding to each data signal; a signal grouping assembly connected to an output end of the signal processing assembly and configured to receive the plurality of data signals and the channel parameter corresponding to each data signal, and group the plurality of data signals according to the channel parameters of the plurality of data signals; and a signal detection assembly connected to an output end of the signal grouping assembly and configured to receive the plurality of grouped data signals and perform group detection on the plurality of grouped data signals to obtain a group detection result for all the data signals.

2. The signal detection device according to claim 1, further comprising:
a signal combined detection assembly connected to an output end of the signal detection assembly and configured to receive the group detection result for all the data signals and perform interference cancellation processing on the group detection result to obtain an output detection result for all the data signals.

3. The signal detection device according to claim 2, wherein the signal combined detection assembly is configured to perform interference cancellation processing on the group detection result in at least one of the following ways:

performing serial interference cancellation processing on the group detection result; or performing parallel interference cancellation processing on the group detection result; or acquiring, from the group detection result, a signal detection result for each data signal and performing serial interference cancellation processing on all the signal detection results; or acquiring, from the group detection result, the signal detection result for each data signal and performing parallel interference cancellation processing on all the signal detection results.

4. The signal detection device according to claim 2, wherein the signal combined detection assembly is further configured to perform multiple iterative interference cancellation processing on the output detection result, wherein an input of the next iterative interference cancellation processing is the output detection result corresponding to the previous iterative interference cancellation processing.

5. The signal detection device according to claim 1, wherein the signal grouping assembly is configured to calculate an eigenvalue corresponding to each data signal based on the channel parameters of the plurality of data signals and a preset channel parameter scoring strategy, and classify a number of data signals with eigenvalues being within the same preset range among all the data signals into the same group.

6. The signal detection device according to claim 5, wherein the channel parameter scoring strategy comprises at least one of the following:

in response to that the channel parameter comprises a signal to interference plus noise ratio, performing scoring based on the signal to interference plus noise ratio; or in response to that the channel parameter comprises a signal-noise ratio, performing scoring based on the signal-noise ratio; or in response to that the channel parameter comprises a channel matrix, performing scoring based on main diagonal elements of the channel matrix; or in response to that the channel parameter comprises a channel matrix, performing scoring based on a column 2-norm of the channel matrix; or in response to that the channel parameter comprises a signal strength, performing scoring based on the signal strength.

7. The signal detection device according to claim 1, wherein the signal detection assembly is configured to perform group detection on the plurality of grouped data signals using at least one of a zero forcing detection algorithm, or a minimum mean squared error detection algorithm, or a maximum likelihood detection algorithm, or a spherical detection algorithm, or a serial interference cancellation detection algorithm, or a parallel interference cancellation detection algorithm.

8. The signal detection device according to claim 1, wherein the signal processing assembly comprises:

a first signal processing assembly configured to receive an initial signal comprising a plurality of data streams and perform front-end processing on the initial signal to obtain a plurality of first processed signals; and a second signal processing assembly connected to the first signal processing assembly and the signal grouping assembly, respectively, and configured to receive all the first processed signals sent by the first signal processing assembly, perform frequency bias correction and frequency domain processing on all the first processed signals to obtain all the data signals carrying the channel parameters, and send all the data signals and the channel parameter corresponding to each data signal to the signal grouping assembly.

9. A signal detection method applied to a signal detection device, wherein the signal detection device comprises a signal processing assembly, a signal grouping assembly, and a signal detection assembly, and the signal detection assembly is connected to the signal grouping assembly and a signal combined detection assembly, respectively; and
the signal detection method comprises:

controlling the signal processing assembly to receive an initial signal comprising a plurality of data streams and preprocess the initial signal to obtain a plurality of data signals and a channel parameter corresponding to each data signal;
controlling the signal grouping assembly to receive the plurality of data signals and the channel parameter corresponding to each data signal, and group the plurality of data signals according to the channel parameters of the plurality of data signals; and
controlling the signal detection assembly to receive the plurality of grouped data signals and perform group detection on the plurality of grouped data signals to obtain a group detection result for all the data signals.

10. The signal detection method according to claim 9, wherein the signal detection device further comprises the signal combined detection assembly connected to an output end of the signal detection assembly; and after the performing group detection on the plurality of grouped data signals to obtain a group detection result for all the data signals, the method further comprises:
controlling the signal combined detection assembly to receive the group detection result for all the data signals and perform interference cancellation processing on the group detection result to obtain an output detection result for all the data signals.

11. The signal detection method according to claim 10, wherein the controlling the signal combined detection assembly to perform interference cancellation processing on the group detection result comprises at least one of the following:

controlling the signal combined detection assembly to perform serial interference cancellation processing on the group detection result; or
controlling the signal combined detection assembly to perform parallel interference cancellation processing on the group detection result; or
controlling the signal combined detection assembly to acquire, from the group detection result, a signal detection result for each data signal and perform serial interference cancellation processing on all the signal detection results; or
controlling the signal combined detection assembly to acquire, from the group detection result, the signal detection result for each data signal and perform parallel interference cancellation processing on all the signal detection results.

12. The signal detection method according to claim 10, wherein after the performing interference cancellation processing on the group detection result to obtain an output detection result for all the data signals, the method further comprises:
controlling the signal combined detection assembly to perform multiple iterative interference cancellation processing on the output detection result, wherein an input of the next iterative interference cancellation processing is the output detection result corresponding to the previous iterative interference cancellation processing.

13. The signal detection method according to claim 9, wherein the controlling the signal grouping assembly to group the plurality of data signals according to the channel parameters of the plurality of data signals comprises:

controlling the signal grouping assembly to calculate an eigenvalue corresponding to each data signal based on the channel parameters of the plurality of data signals and a preset channel parameter scoring strategy; and
controlling the signal grouping assembly to classify a number of data signals with eigenvalues being within the same preset range among all the data signals into the same group.

14. The signal detection method according to claim 13, wherein the channel parameter scoring strategy comprises at least one of the following:

in response to that the channel parameter comprises a signal to interference plus noise ratio, performing scoring based on the signal to interference plus noise ratio; or
in response to that the channel parameter comprises a signal-noise ratio, performing scoring based on the signal-noise ratio; or
in response to that the channel parameter comprises a channel matrix, performing scoring based on main diagonal elements of the channel matrix; or

in response to that the channel parameter comprises a channel matrix, performing scoring based on a column 2-norm of the channel matrix; or

in response to that the channel parameter comprises a signal strength, performing scoring based on the signal strength.

15. The signal detection method according to claim 9, wherein the controlling the signal detection assembly to perform group detection on the plurality of grouped data signals comprises:

controlling the signal detection assembly to perform group detection on the plurality of grouped data signals using at least one of a zero forcing detection algorithm, or a minimum mean squared error detection algorithm, or a maximum likelihood detection algorithm, or a spherical detection algorithm, or a serial interference cancellation detection algorithm, or a parallel interference cancellation detection algorithm.

16. The signal detection method according to claim 9, wherein the signal processing assembly comprises a first signal processing assembly and a second signal processing assembly, and the second signal processing assembly is connected to the first signal processing assembly and the signal grouping assembly, respectively; and the controlling the signal processing assembly to receive an initial signal comprising a plurality of data streams and preprocess the initial signal to obtain a plurality of data signals and a channel parameter corresponding to each data signal comprises:

controlling the first signal processing assembly to receive an initial signal comprising a plurality of data streams and perform front-end processing on the initial signal to obtain a plurality of first processed signals;
controlling the second signal processing assembly to receive all the first processed signals sent by the first signal processing assembly and perform frequency bias correction and frequency domain processing on all the first processed signals to obtain all the data signals carrying the channel parameters, and
controlling the second signal processing assembly to send all the data signals and the channel parameter corresponding to each data signal to the signal grouping assembly.

17. A signal detection device, comprising:

at least one processor; and
at least one memory configured to store at least one program,

wherein the at least one program, when executed by the at least one processor, implements the signal detection method according to any one of claims 9 to 16.

18. A computer-readable storage medium having a processor-executable program stored therein, wherein the processor-executable program is configured, when executed by a processor, to implement the signal detection method according to any one of claims 9 to 16.

Signal detection device

Signal processing assembly

Signal grouping assembly

Signal detection assembly

100

120

130

110

FIG. 1

Signal detection device

Signal processing assembly

Signal grouping assembly

Signal detection assembly

Signal combined detection assembly

100

130

110

120

140

FIG. 2

Terminal 1

Terminal 2

Terminal n

AP

FIG. 3

```
┌──────────────┐
│ First signal │
│ processing   │◄──── Initial signal
│ assembly     │
└──────┬───────┘
       │
       ▼
┌──────────────┐
│ Second signal│
│ processing   │
│ assembly     │
└──────┬───────┘
       │
       ▼
┌──────────────┐          ┌──────────┐
│ Signal       ├─────────►│ Detector │
│ grouping     ├─────────►│ Detector │───┐    ┌──────────────┐
│ assembly     │          └──────────┘   │    │ Detection    │      Output
└──────────────┘              ......      ├───►│ result       ├─────►
                          ┌──────────┐    │    │ combiner     │  detection result
                          │ Detector │────┘    └──────────────┘
                          └──────────┘
```

FIG. 4

```
         ┌──────────────┐
         │ First signal │
         │ processing   │◄──── Initial signal
         │ assembly     │
         └──────┬───────┘
                │
                ▼
         ┌──────────────┐
         │ Second signal│
         │ processing   │
         │ assembly     │
         └──────┬───────┘
                │
                ▼
         ┌──────────────┐      ┌──────────┐
         │ Signal       ├─────►│          │     Output
         │ grouping     ├─────►│ Detector ├──────►
         │ assembly     │......►│          │  detection result
         └──────────────┘      └──────────┘
```

FIG. 5

First signal processing assembly ◄— Initial signal

Second signal processing assembly

Signal grouping assembly → ...... → Detector → Detection result combiner → Output detection result

FIG. 6

First signal processing assembly ◄— Initial signal

Second signal processing assembly

Signal grouping assembly → ...... → Detector → Iteration result combiner → Output detection result

FIG. 7

First signal processing assembly ← Initial signal

Second signal processing assembly

Signal grouping assembly → Detector / Detector / ...... / Detector → Detection result combiner → Detection result combiner → Output detection result

FIG. 8

First signal processing assembly ← Initial signal

Second signal processing assembly

Signal grouping assembly → Detector → Detection result combiner → Detection result combiner → Output detection result

FIG. 9

Control a signal processing assembly to receive an initial signal including a plurality of data streams and preprocess the initial signal to obtain a plurality of data signals and a channel parameter corresponding to each data signal ⟍S110

Control a signal grouping assembly to receive the plurality of data signals and the channel parameter corresponding to each data signal, and group the plurality of data signals according to the channel parameters of the plurality of data signals ⟍S120

Control a signal detection assembly to receive the plurality of grouped data signals and perform group detection on the plurality of grouped data signals to obtain a group detection result for all the data signals ⟍S130

FIG. 10

Control a signal processing assembly to receive an initial signal including a plurality of data streams and preprocess the initial signal to obtain a plurality of data signals and a channel parameter corresponding to each data signal ⟩ S110

Control a signal grouping assembly to receive the plurality of data signals and the channel parameter corresponding to each data signal, and group the plurality of data signals according to the channel parameters of the plurality of data signals ⟩ S120

Control a signal detection assembly to receive the plurality of grouped data signals and perform group detection on the plurality of grouped data signals to obtain a group detection result for all the data signals ⟩ S130

Control a signal combined detection assembly to receive the group detection result for all the data signals and perform interference cancellation processing on the group detection result to obtain an output detection result for all the data signals ⟩ S140

FIG. 11

Control a signal grouping assembly to calculate an eigenvalue corresponding to each data signal based on channel parameters of a plurality of data signals and a preset channel parameter scoring strategy — S1201

Control the signal grouping assembly to classify a number of data signals with eigenvalues being within the same preset range among all the data signals into the same group — S1202

FIG. 12

Control a signal processing assembly to receive an initial signal including a plurality of data streams and preprocess the initial signal to obtain a plurality of data signals and a channel parameter corresponding to each data signal — S110

Control a signal grouping assembly to receive the plurality of data signals and the channel parameter corresponding to each data signal, and group the plurality of data signals according to the channel parameters of the plurality of data signals — S120

Control a signal detection assembly to perform group detection on the plurality of grouped data signals using at least one of a zero forcing detection algorithm, a minimum mean squared error detection algorithm, a maximum likelihood detection algorithm, a spherical detection algorithm, a serial interference cancellation detection algorithm, and a parallel interference cancellation detection algorithm — S132

FIG. 13

Control a first signal processing assembly to receive an initial signal including a plurality of data streams and perform front-end processing on the initial signal to obtain a plurality of first processed signals ⟞S111

Control a second signal processing assembly to receive all the first processed signals sent by the first signal processing assembly and perform frequency bias correction and frequency domain processing on all the first processed signals to obtain all data signals carrying channel parameters ⟞S112

Control the second signal processing assembly to send all the data signals and the channel parameter corresponding to each data signal to a signal grouping assembly ⟞S113

FIG. 14

Processor 210

Memory 220

200

Signal detection device

FIG. 15

EP 4 546 686 A1

# INTERNATIONAL SEARCH REPORT

International application No.

**PCT/CN2023/100243**

### A. CLASSIFICATION OF SUBJECT MATTER

H04L1/20(2006.01)i

According to International Patent Classification (IPC) or to both national classification and IPC

### B. FIELDS SEARCHED

Minimum documentation searched (classification system followed by classification symbols)

IPC: H04L H04W H04B

Documentation searched other than minimum documentation to the extent that such documents are included in the fields searched

Electronic data base consulted during the international search (name of data base and, where practicable, search terms used)

CNTXT; ENTXT; ENTXTC; WOTXT; VEN: groups, class???, stream, flow, signal, SIR, SINR, SNR, parameter, power, RSRP, RSRQ, detect???, monitor???, ZF, MMSE, ML, 检测, 监测, 分组, 分类, 数据流, 通道, 迫零, 最小均方差, 最大似然, 串行, 并行, 干扰

### C. DOCUMENTS CONSIDERED TO BE RELEVANT

| Category* | Citation of document, with indication, where appropriate, of the relevant passages | Relevant to claim No. |
|---|---|---|
| X | US 2002018454 A1 (MISRA, R. M. et al.) 14 February 2002 (2002-02-14)<br>claims 1-25, and description, paragraphs 15-84 | 1-18 |
| X | US 5933423 A (NOKIA TELECOMMUNICATIONS OY) 03 August 1999 (1999-08-03)<br>claims 1-15, description, column 3, line 26 to column 6, line 27, and figures 1-4 | 1-18 |
| A | CN 112565117 A (XIDIAN UNIVERSITY) 26 March 2021 (2021-03-26)<br>entire document | 1-18 |
| A | CN 114389756 A (SOUTHEAST UNIVERSITY) 22 April 2022 (2022-04-22)<br>entire document | 1-18 |
| A | US 10637705 B1 (GENGHISCOMM HOLDINGS, LLC.) 28 April 2020 (2020-04-28)<br>entire document | 1-18 |
| A | US 2007127587 A1 (SAMSUNG ELECTRONICS CO., LTD.) 07 June 2007 (2007-06-07)<br>entire document | 1-18 |
| A | US 2014211704 A1 (QUALCOMM INC.) 31 July 2014 (2014-07-31)<br>entire document | 1-18 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 September 2023** | **19 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/100243**

| C. | DOCUMENTS CONSIDERED TO BE RELEVANT | |
|---|---|---|
| Category* | Citation of document, with indication, where appropriate, of the relevant passages | Relevant to claim No. |
| A | US 2015327282 A1 (QUALCOMM INC.) 12 November 2015 (2015-11-12)<br>entire document | 1-18 |
| A | US 2020145155 A1 (SEMICONDUCTOR COMPONENTS INDUSTRIES, LLC.) 07 May 2020 (2020-05-07)<br>entire document | 1-18 |

Form PCT/ISA/210 (second sheet) (July 2022)

INTERNATIONAL SEARCH REPORT
Information on patent family members

International application No.

**PCT/CN2023/100243**

| Patent document cited in search report | | | Publication date (day/month/year) | Patent family member(s) | | | Publication date (day/month/year) |
|---|---|---|---|---|---|---|---|
| US | 2002018454 | A1 | 14 February 2002 | CA | 2403369 | A1 | 20 September 2001 |
| | | | | WO | 0169801 | A2 | 20 September 2001 |
| | | | | JP | 2003531513 | A | 21 October 2003 |
| | | | | KR | 20050005565 | A | 13 January 2005 |
| | | | | AT | 323973 | T | 15 May 2006 |
| | | | | DE | 60118896 | D1 | 24 May 2006 |
| | | | | TW | 497341 | B | 01 August 2002 |
| | | | | US | 2005281214 | A1 | 22 December 2005 |
| | | | | HK | 1053551 | A1 | 24 October 2003 |
| | | | | EP | 1264415 | A2 | 11 December 2002 |
| | | | | ES | 2262630 | T3 | 01 December 2006 |
| | | | | KR | 20020082883 | A | 31 October 2002 |
| | | | | CN | 1429433 | A | 09 July 2003 |
| | | | | CN | 1925345 | A | 07 March 2007 |
| US | 5933423 | A | 03 August 1999 | EP | 0716798 | A1 | 19 June 1996 |
| | | | | JPH | 09505199 | A | 20 May 1997 |
| | | | | FI | 943196 | A0 | 04 July 1994 |
| | | | | WO | 9601544 | A2 | 18 January 1996 |
| | | | | NO | 960860 | D0 | 01 March 1996 |
| | | | | AU | 2795095 | A | 25 January 1996 |
| | | | | DE | 69533917 | D1 | 17 February 2005 |
| | | | | AT | 287186 | T | 15 January 2005 |
| | | | | CN | 1130456 | A | 04 September 1996 |
| CN | 112565117 | A | 26 March 2021 | None | | | |
| CN | 114389756 | A | 22 April 2022 | None | | | |
| US | 10637705 | B1 | 28 April 2020 | US | 11700162 | B2 | 11 July 2023 |
| | | | | US | 11018918 | B1 | 25 May 2021 |
| US | 2007127587 | A1 | 07 June 2007 | KR | 20080084560 | A | 19 September 2008 |
| | | | | WO | 2007064162 | A1 | 07 June 2007 |
| US | 2014211704 | A1 | 31 July 2014 | WO | 2014117131 | A1 | 31 July 2014 |
| | | | | EP | 2949090 | A1 | 02 December 2015 |
| | | | | JP | 2016509808 | A | 31 March 2016 |
| | | | | KR | 20150111968 | A | 06 October 2015 |
| | | | | CN | 105027522 | A | 04 November 2015 |
| US | 2015327282 | A1 | 12 November 2015 | WO | 2015175345 | A1 | 19 November 2015 |
| US | 2020145155 | A1 | 07 May 2020 | EP | 3648371 | A1 | 06 May 2020 |
| | | | | TW | 202034731 | A | 16 September 2020 |
| | | | | US | 2022278790 | A1 | 01 September 2022 |
| | | | | CN | 111148267 | A | 12 May 2020 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210736249